# EUROPEAN PATENT SPECIFICATION

(11) **EP 2 743 237 B1**
(45) Date of publication and mention of the grant of the patent: **27.04.2016**
(21) Application number: 13196177.3
(22) Date of filing: 09.12.2013
(51) Int. Cl.: C03B 37/018

(54) **METHOD FOR ACTIVATING AN INNER SURFACE OF A HOLLOW GLASS SUBSTRATE TUBE FOR THE MANUFACTURING OF AN OPTICAL FIBER PREFORM.**
VERFAHREN ZUR AKTIVIERUNG EINER INNENFLÄCHE EINES HOHLEN GLASSUBSTRATROHRS ZUR HERSTELLUNG EINER GLASFASERVORFORM
PROCÉDÉ D'ACTIVATION D'UNE SURFACE INTERNE D'UN TUBE SUBSTRAT CREUX EN VERRE POUR LA FABRICATION D'UNE PRÉFORME DE FIBRE OPTIQUE

(30) Priority: 11.12.2012 NL 2009962
(43) Date of publication of application: 18.06.2014
(73) Proprietor: Draka Comteq B.V., 1083 HJ Amsterdam (NL)
(72) Inventor: Milicevic, Igor, 5707 PW Helmond (NL); van Stralen, Mattheus Jacobus Nicolaas, 5036 ST Tilburg (NL); Hartsuiker, Johannes Antoon, 5624 KL Eindhoven (NL)
(74) Representative: Algemeen Octrooi- en Merkenbureau B.V.

(56) References cited:
- EP-A1- 2 008 978
- EP-A1- 2 377 824
- DE-A1- 3 031 160
- JP-A- S6 221 724
- JP-A- 2006 315 935
- US-A- 4 493 721

## Description

The present invention relates to a method for activating an inner surface of a hollow glass substrate tube for the manufacturing of an optical fiber preform, wherein said activation is a pretreatment of said hollow glass substrate tube before starting the deposition process.

### Background

One of the methods for manufacturing optical fibers comprises depositing multiple thin films or layers of glass (e.g. glass layers) on the inside surface of a (hollow) substrate tube. Subsequently, said substrate tube is collapsed to form a core-rod, which is optionally sleeved or overcladded to form a optical fiber preform from which optical fibers may be drawn.

The glass layers are applied on the inside of the substrate tube by means of introducing glass-forming gases (e.g., doped or undoped reactive gases) into the interior of the substrate tube from one end (i.e., the supply side of the substrate tube). Doped or undoped glass layers are deposited onto the interior surface of the substrate tube. The gases are discharged or removed from the other end of the substrate tube (i.e., the discharge side of the substrate tube), optionally by the use of a vacuum pump. A vacuum pump has the effect of generating a reduced pressure within the interior of the substrate tube.

During a PCVD (plasma chemical vapour deposition) process a localised plasma is generated. Generally, microwaves from a microwave generator are directed toward an applicator via a waveguide. The applicator, which surrounds a glass substrate tube, couples the high frequency energy into the plasma. In addition, the applicator and the substrate tube are generally surrounded by a furnace so as to maintain the substrate tube at a temperature of 900-1300 °C during the deposition process. The applicator (and hence the plasma it forms) is moved reciprocally in the substrate tube's longitudinal direction. A thin glass layer is deposited onto the interior surface of the substrate tube with every stroke or pass of the applicator.

Thus, the applicator is moved in translation over the length of the substrate tube within the boundaries of a surrounding furnace. With this translational movement of the applicator, the plasma also moves in the same direction. As the applicator reaches the furnace's inner wall near one end of the substrate tube, the movement of the applicator is reversed (this point is a reversal point) so that it moves to the other end of the substrate tube toward the furnace's other inner wall (and another reversal point). The applicator and thus the plasma travel in a back-and-forth movement along the length of the substrate tube. Each reciprocating movement is call a "pass" or a "stroke." With each pass, a thin layer of glass is deposited on the substrate tube's inside surface.

Normally, a plasma is generated only in a part of the substrate tube (e.g., the part that is surrounded by the microwave applicator). Typically, the dimensions of the microwave applicator are smaller than the respective dimensions of the furnace and the substrate tube. Only at the position of the plasma are the reactive gases converted into solid glass and deposited on the inside surface of the substrate tube.

The passes increase the cumulative thickness of these thin films (i.e., the deposited material), which decreases the remaining internal diameter of the substrate tube. In other words, the hollow space inside the substrate tube gets progressively smaller with each pass.

This plasma causes the reaction of the glass-forming gases (e.g. O₂, SiCl₄ and e.g. dopant gas GeCl₂ or other gases) that are supplied to the inside of the substrate tube. The reaction of the glass-forming gases allows reaction of Si (Silicon), O (Oxygen) and e.g. the dopant Ge (Germanium) so as to thus effect direct deposition of, for example, Ge-doped SiOx on the inner surface of the substrate tube.

When the deposition is complete, the substrate tube is thermally collapsed into a massive core-rod. This can optionally be externally coated with an additional glass layer, for example by applying silica by means of an outside deposition process, or by placing the preform rod in a so-called jacket tube (or sleeve) - comprised of undoped silica - prior to the optical fibre drawing procedure, so as to thus increase the amount of undoped silica relative to the amount of doped silica in the final fibre. An optical fibre preform is thus obtained. If an extremity of the preform is heated so that it becomes molten, a thin glass fibre can be drawn from the rod and be wound on a reel; said optical fibre then has a core portion and a cladding portion with relative dimensions and refractive indexes corresponding to those of the preform. The fibre can function as a waveguide, for example for use in propagating optical telecommunication signals.

It should be noted that the glass-forming gases flushed through the substrate tube may also contain other components. The addition of a dopant such as C₂F₆ to glass-forming gases will lead to a reduction in the refractive index value of the silica.

The use of an optical fibre for telecommunication purposes requires that the optical fibre be substantially free from defects (for example discrepancies in the percentage of dopants, undesirable cross-sectional ellipticity and the like), because, when considered over a large length of the optical fibre, such defects may cause a significant attenuation of the signal being transported. It is important, therefore, to realise a very uniform and reproducible PCVD process, because the quality of the deposited PCVD layers will eventually determine the quality of the fibres.

In order to have a good initial glass layer attachment on the interior wall of the substrate tube and to prevent the formation of bubbles in these initial glass deposited layers the preform manufacturers have to pre-treat the inside of the hollow substrate tube before the deposition process starts. This is also called a plasma polishing or plasma etching phase. Hence, generally, before starting the deposition of glass layers inside the substrate tube, the inner surface of the initial substrate tube is pretreated or activated for achieving good adhesion and/or for preventing unwanted effects from pollutions that are present in the starting glass material of the substrate tube. This pretreatment or activation is generally carried out by means of etching. This etching is generally carried out by reciprocating a plasma in the substrate tube while flowing an etching gas - for example Freon (C₂F₆) and optionally a carrier gas, such as oxygen (O₂) - through the substrate tube. Such a treatment will etch away glass material from the inside of the substrate tube. It should be noted that when Freon is used in a gas mixture with glass-forming gases the Fluorine from the Freon will be built in the deposited glass layers. In such case Freon will not function as an etching gas.

The present inventors found that such after such an inside etching treatment the inside surface of the substrate tube is not etched uniformly, i.e. serious differences in the amount of material being etched away exist at different radial and/or longitudinal positions. The present inventors have found that this non-uniformly etching is caused by preferential etching in the substrate tube that can vary between substrate tube (batches).

Without wishing to be bound to a particular theory it is suggested by the present inventors that there is a material inhomogeneity within the inner surface of the substrate tube and that some parts are etched to a larger extent than other parts. The preferential etching will give rise to local disturbances in the glass deposited in the subsequent PCVD process forming said optical fiber preform. These local disturbances can take the form of small indentations or holes The effect of this uneven etching process is that the roughness of the inside surface of the hollow substrate tube will be increased. In other words, the indentations or holes are increased.

As described above such local disturbances are undesired since they could lead to a decreased quality of the optical fibers produced. This is due to the fact that if the initial surface of the substrate tube has irregularities, the deposition of glass layers will in most cases amplify the initial roughness. It has been observed by the present inventors that when a prior art activation step by etching the substrate tube is carried out, the indentations on the inside of the glass tube will lead to the formation of droplets or protrusions in the glass layers that are subsequently deposited.

Due to this phenomenon, in the process of inside vapour deposition of glass layers, when the amount of deposited glass material increases, this initial roughness will create disturbances in the end product, i.e. an optical waveguide. This is especially severe for a multimode optical fibre because the refractive index profile will also be modified resulting in a degradation of quality, i.e. uniform optical properties. Deviations from the desired refractive index in longitudinal direction have been observed with prior art activation methods. In other words, the refractive index is not stable in longitudinal direction which is undesirable.

Several publications in the patent literature are concerned with this aspect.

EP 2 008 978 A1 relates to a method for the deposition of glass layers on the inner surface of the hollow substrate tube in which the deposition of glass layers is interrupted by carrying out an intermediate step, which intermediate step comprises supplying a fluorine-containing etching gas into the hollow substrate tube. This intermediate step removes deposited soot outside of the glass deposition area, i.e. soot deposited outside of the plasma zone. This application relates to an etching process in a small part of the substrate tube.

US 4,493,721 relates to a method of manufacturing optical fibres in which method the inner surface of a substrate tube is etched with a fluorine compound before the actual deposition process is started. After the etching step the first layers of glass are deposited.

JP62021724A relates to a method of polishing the inner surface of a glass tube though a plasma flame generated in the glass tube.

Another method of etching, via washing the interior of a hollow substrate tube with hydrofluoric acid, being a highly hazardous material, is from the viewpoint of environment and safety undesirable.

### Object of the invention

An object of the present invention is to provide a method for activating the inner surface of a substrate tube which does not induce an increase in the inner surface irregularities.

Another object of the present invention is to provide a method for manufacturing a preform for optical fibres by means of an inside vapour deposition process in which the formation of bubbles in the glass layers is reduced to a minimum.

Another object of the present invention is to provide a method for manufacturing a preform for optical fibres by means of an inside vapour deposition process in which the initial glass layer attachment to the interior of the hollow substrate tube is such that the formation of cracks in the glass layers thus deposited are reduced to a minimum.

Another object of the present invention is to provide a method for manufacturing a preform for optical fibres by means of an inside vapour deposition process in which the roughness of the interior of the hollow substrate tube is not substantially increased after carrying out an etching step.

Another object of the present invention is to provide a method for manufacturing a preform for optical fibres by means of an inside vapour deposition process in which the roughness of the inner surface of the starting hollow substrate tube is such that no glass layer forming disturbing irregularities are present.

There is thus a need to have a pretreatment or activation of the substrate tube that improves the smoothness of the inner surface in order to increase the homogeneity of the later deposited glass layers.

### Summary of the invention

The present invention relates in a first aspect to a method for activating an inner surface of a hollow glass substrate tube for the manufacturing of an optical fiber preform, said method comprising the steps of:
i) depositing a number of activation glass layers on said inner surface of said hollow substrate tube by means of a PCVD process; wherein the thickness of the activation glass layers is at least 10 micrometer and at most 250 micrometer;
ii) at least partially removing said activation layers deposited in step i) by means of an etching process, wherein the activation glass layers as deposited in step i) are removed to an extent of at least 30 %.

In an embodiment of the present method the etching process is plasma etching with an etching gas.

In another embodiment of the present method said etching gas is a fluorine-containing etching gas.

In yet another embodiment of the present invention said etching gas comprises a hydrogen-free fluorinated compound and a carrier gas.

In yet another embodiment of the present method said etching gas is selected from the group, consisting of CCl₂F₂, CF₄, C₂F₆, SF₆, F₂ and SO₂F₂, or a combination thereof.

In yet another embodiment of the present method, said carrier gas is selected from the group consisting of oxygen (O₂), nitrogen (N₂), or argon (Ar).
In yet another an embodiment of the present method said fluorine-containing etching gas is a mixture of at least O₂ and C₂F₆ and/or SF₆.

In yet another embodiment of the present method, undoped glass-forming gases are used in the PCVD process of step i),

In yet another embodiment of the present method, as said undoped glass-forming gases a mixture of at least O₂ and SiCl₄ is used.

In yet another embodiment of the present method the thickness of the activation glass layers as deposited in step i) is at least 25 micrometers.

In yet another embodiment of the present method the thickness of the activation glass layers as deposited in step i) is at least 50 micrometers.

In yet another embodiment of the present method the thickness of the activation glass layers as deposited in step i) is at most 125 micrometer.

In yet another embodiment of the present method the thickness of the activation glass layers as deposited in step i) is at most 75 micrometer.

In yet another embodiment of the present method during step ii) the activation glass layers as deposited in step i) are removed to an extent of at least 40 %.

In yet another embodiment of the present method during step ii) the activation glass layers as deposited in step i) are removed to an extent of at least at least 50 %.

In yet another embodiment of the present method during step ii) the activation glass layers as deposited in step i) are removed to an extent of at most 100 %.

In yet another embodiment of the present method during step ii) the activation glass layers as deposited in step i) are removed to an extent of at most 90 %, or optionally to an extent of 95 % or even 99%.

In yet another embodiment of the present method during step ii) the activation glass layers as deposited in step i) are removed to an extent of at most 80 %.

In yet another embodiment of the present invention the glass deposition during step i) is carried out along the length of the hollow substrate tube.

In yet another embodiment of the present invention the glass deposition during step i) is carried out along at least 80%, preferably at least 90%, more preferably at least 95% the length of the hollow substrate tube.

The present inventors found that one or more of the objects of the present invention are achieved by the present method.

### Definitions as used in the present description

The following definitions are used in the present description and claims to define the stated subject matter. Other terms not cited below are meant to have the generally accepted meaning in the field.
- "activating" as used in the present description in combination with hollow substrate tube means: pretreatment of a hollow substrate tube before starting the deposition process - generally before starting a conventional CVD (chemical vapor deposition) process inside of the hollow substrate tube. The activation takes place on the initial or original or virgin surface of the substrate tube. It should be noted that during the activation according to the present invention a plurality of activation layers is deposited. Only the first layer will have direct contact with the initial or original or virgin surface of the substrate tube. But the complete process of deposition of a plurality of activation layers is considered to be "activating".
- "inner surface" as used in the present description means: the inside or interior surface of the hollow substrate tube.
- "hollow substrate tube" as used in the present description means: an elongated tube having a cavity within; generally, the inside of said tube is provided (or coated) with a plurality of glass layers during the manufacturing of a preform.
- "the length of the hollow substrate tube" as used in the present description means: the effective length of the total hollow substrate tube, being the length of the substrate tube in which a plasma may by generated and in which deposition of glass may occur.
- "cavity" as used in the present description means: the space surrounded by the wall of the substrate tube.
- "glass" or "glass material" as used in the present description means: crystalline or vitreous (glassy) oxide material - e.g. silica (SiO₂) or even quartz - deposited by means of a vapour deposition process.
- "silica" as used in the present description means: any substance in the form of SiOx, whether or not stoichiometric, and whether or not crystalline or amorphous.
- "activation glass layers" as used in the present description means: layers of glass material that are used to activate the inner surface of the hollow substrate tube. A plurality of activation layers is deposited. Only the first layer will have direct contact with the initial or original or virgin surface of the substrate tube. But all layers deposited during step i) are considered to be activation layers. "etching process" as used in the present description means: a process of removing glass materials through chemical action.
- "etching gas" as used in the present description means: a gaseous etching compound used during the etching process; an etching gas is a gas, which under the appropriate conditions (e.g., temperature and concentration) is capable of removing glass materials through chemical action.
- "plasma etching" as used in the present description means: an etching process in which the etching conditions for an etching gas are created or improved in a plasma.
- "fluorine-containing etching gas" as used in the present description means: an etching gas containing fluorine and/or one or more fluorinated compounds.
- "fluorinated compound" as used in the present description means: a compound comprising at least one bound fluorine atom, e.g. a fluorinated hydrocarbon.
- "hydrogen-free fluorinated compound" as used in the present description means: a per-fluorinated compound; a fluorinated compound in which no hydrogen atoms are present, e.g. a fluorinated hydrocarbon wherein al hydrogen atoms have been replaced by fluorine atoms.
- "carrier gas" as used in the present description means: a gas that dilutes the concentration of etching gas, without reacting directly with the etching gas.
- "glass-forming gases" as used in the present description means: reactive gases used during the deposition process to form glass layers.
- "undoped glass-forming gases" as used in the present description means: gasses without intentionally added dopants that are able to react to essentially pure silica glass.
- "extent of removal of the activation glass layers" as used in the present description means: the percentage of the activation glass layers that is removed; this can be calculated e.g. by the difference in thickness of the total number of activation glass layers before and after removal or calculated by the weight of the glass deposited and the glass removed.

### Detailed description of the present invention

The present invention thus relates to method of activating the hollow substrate tube used for the manufacture of a optical fiber preform. A (thin) layer of glass (in the form of several activation glass layers) is deposited and subsequently partially or fully removed by etching.

The present inventors have found that the etching step - required to obtain good adhesion - has some negative side effects. The present inventors have found out that the substrate tube as supplied (i.e. the original substrate tube) can e.g. be non-homogenous in composition. This inhomogeneity will lead to a preferential etching, i.e. etching of materials having a different effect on different parts of the inner surface of the substrate tube.

In other words, the etching is inhomogeneous over the inner surface of the substrate tube. This inhomogeneity causes severe problems during the deposition steps. The present inventors have found that by carrying out the etching step on PCVD deposited layers instead of on the initial substrate tube itself the benefits of the etching process (viz. the improved adhesion) is retained whereas the negative side effects of the etching (the creation of surface inhomogeneity) is diminished or even fully eliminated.

The present inventors assume that when PCVD deposited activation glass layers, are etched away, the inner surface of the substrate tube obtained is much more smooth and uniform than the initial (i.e. original or virgin) surface of a substrate before the deposition of the preliminary glass layers and the etching thereof.

According to the present method one must understand that the formation of activation (or preliminary) glass layers is an essential process step in the present invention and the deposition of these activation glass layers takes place before the actual deposition process takes place.

These activation glass layers will be (partially or preferably almost fully) removed from the interior of the hollow substrate tube by the afore discussed etching step. And after removal of these activation glass layers the actual deposition process of glass layers will take place, i.e. the formation of inside glass layers resulting in a preform having a specific refractive index profile. The activation glass layers do not contribute to the desired refractive index profile. These activation glass layers are to be (partially or fully) removed before the actual deposition process takes place. The function of the removal of these activation glass layers is to create an inner substrate tube surface being smooth, without unwanted irregularities and disturbances and suitable as a surface for the subsequent deposition of glass layers for the creation of the desired specific refractive index profile.

During the PCVD process as carried out in step i) of the present invention generally several steps are carried out. These steps are the following:
a) providing a hollow glass substrate tube having an inner surface;
b) heating said hollow substrate tube to a temperature of at least 1000°C (degrees Celsius),
c) supplying one or more glass-forming gases into said hollow substrate tube;
d) depositing a number of activation glass layers on said inner surface of said hollow substrate tube; and
e) terminating the supply of glass-forming gases into said hollow substrate tube.

Generally, said hollow substrate tube has a supply side and a discharge side. Said hollow substrate tube can be considered to consist of a wall enclosing a cavity. In other words, inside of said hollow substrate tube a cavity is present.

Said hollow substrate tube can be considered to have an outer surface (in other words the outer surface of the wall of said hollow substrate tube) and an inner surface (in other words, the inner surface of said wall of said hollow substrate tube). Said inner surface of said substrate tube is in contact with said cavity that is present on the inside of the substrate tube. In an embodiment, said hollow substrate tube is cylindrical in shape and hence provides (or encloses) a cylindrical cavity.

Generally, said one or more glass-forming gases are introduced into said hollow substrate tube via the supply side thereof. Said gases are introduced into said cavity that is present inside of said hollow substrate tube.

In other words, the wall thickness of said hollow substrate tube is increased. The increase in wall thickness is related to the number and thickness of the activation glass layers. In still other words, the cavity that is present within said hollow substrate tube is decreased in size. The decrease is related to the number and thickness of the activation glass layers. The deposition generally takes place by creating certain temperature conditions in at least a part of said hollow substrate tube. Preferably, a reaction zone (or plasma zone) is present inside of said hollow substrate tube. Said reaction zone is defined as a zone or part in which deposition of glass takes place. In other words, in said reaction zone temperature conditions suitable for deposition of glass layers are created. Preferably, said reaction zone has the length of only part of the length hollow substrate tube. In such an embodiment, in order to obtain glass deposition along the length of the total hollow substrate tube said reaction zone moves - preferably back and forth - along the longitudinal axis of said hollow substrate tube. Preferably, said between a reversal point near the supply side and a reversal point near the discharge side of said hollow substrate tube.

With terminating is meant stopping or halting the supply of the glass-forming gases to the inside of said hollow substrate tube. This will stop the deposition process. In other words, this step e) can also be formulated as terminating the deposition of activation glass layers.

The etching process of step ii) of the present method comprises preferably the step of supplying an etching gas (or several etching gases) into said hollow substrate tube. This etching gas will react with the deposited activation glass layers via a process known per se. This will the removal of (part of) the activation glass layers thus deposited in step i).

This etching step is thus a step of passing a gaseous etching compound through the inside of said hollow substrate tube, preferably via the supply side thereof. This step ensures removal of at least a part of or all of the activation glass layers that have been previously deposited. This removal is carried out by means of etching. The result of the method according to the present invention is thus a hollow substrate tube having an activated inner surface.

The present invention is moreover related to a process of manufacturing a preform for optical fibers by means of an inside vapor deposition process, which method comprises the steps of
providing a hollow substrate tube having an activated inner surface;
supplying doped and/or undoped glass-forming gases into the hollow substrate tube having an activated inner surface (preferably via the supply side thereof);
depositing a number of glass layers on the inside of the hollow substrate tube;
collapsing or consolidating the substrate tube thus obtained into an optical fibre preform.

The following embodiments for the present invention are applicable to all aspects of the present invention.

In an embodiment of the present invention a fluorine-containing etching gas is used.

In another embodiment, said fluorine-containing etching gas comprises a hydrogen-free fluorocarbon and a carrier gas. The advantage of this is that the absence of hydrogen atoms prevents the introduction of hydroxyl-groups during the deposition process. These hydroxyl-groups will cause increased attenuation of the optical fibre resulting from the optical fibre preform prepared from the activated substrate tube.

The etching gas is preferably selected from the group consisting of CCl₂F₂, CF₄, C₂F₆, SF₆, F₂ and SO₂F₂, or a combination thereof.

Preferably, said etching gas is used in the presence of a carrier gas, such as oxygen, nitrogen or argon.

When a fluorocarbon compound (fluorinated carbon compound) is used as etching gas, it is possible that deposition of elemental carbon takes place. Without wishing to be bound by a theory the inventors propose that the fluorine atoms of the etching gas take care of the etching process and the carbon atoms of the etching gas are deposited on the inside surface of the substrate tube. In some cases a black film is found to be formed. The use of oxygen (O₂) as carrier gas is preferred when a fluorocarbon compound is used. The oxygen was found by the present inventors to react with the carbon part of the etching gas to prevents carbon (C) deposition.

Examples of preferred etching gases include but are not limited CF₄, SF₆, NF₃, C₂F₆, C₄F₈, CHF₃, CClF₃, CCl₂F₂, CCl₃F, SiF₄ and combinations particularly preferred family of etchant gas is fluorine based gas compound. More preferably, the first etchant gas is selected from the group consisting of CF₄, SF₆, NF₃, C₂F₆, C₄F₈, CHF₃, SiF₄ and combinations thereof.

The concentration of the etching gas and the temperature at which the gas flows across the surface of the oxide material present on the interior of the hollow substrate tube affects the rate of removal of the deposited oxide material and/or contaminated region by the etching gas. Preferably, the combination of the temperature and etching gas concentration are sufficient to allow for a rapid etching rate (removal rate) of the deposited oxide material, which optimally results in decreasing the processing time of the substrate tube. The temperature of the etching step is less than about 1300°C., more preferably less than about 1250°C and most preferably less than about 1200°C.

With rapid removal rates, the fluorine tends to diffuse into the remaining deposited oxide material more rapidly than the oxide material can be removed through etching. This creates a contamination layer in the deposited oxide material of fluorine, which in turn changes the refractive index of the remaining oxide material, and therefore the resultant preform, and ultimately of the optical fibre drawn from this material. That contamination layer should be removed during the etching step.

In an embodiment of the present method the fluorine-containing etching gas is a combination of C₂F₆ and O₂. The advantage of this combination is cited above.

According to preferred embodiment undoped glass-forming gases are used in step i). The glass layers thus deposited will not have any influence of the final optical properties of the fibres. In addition, preliminary glass layers formed on basis of undoped glass-forming gases can easily be removed by the etching step. A preferred example is a mixture of SiCl₄ and O₂.

The activation layers have a minimal thickness of at least 10 micrometers, preferably at least 25 micrometers, more preferably at least 50 micrometers. This minimal thickness will ensure the benefits from the etching process. Etching should hence preferably be carried out over a thickness of at least 10 micrometers to have sufficient effect.

The activation layers have a maximal thickness of at most 250 micrometers, preferably at most 125 micrometers, more preferably at most 75 micrometers. The maximal thickness is selected because there is no benefit for further increasing the thickness with respect to the etching process and further increasing the thickness will lead to additional cost of material, equipment wear and labour costs.

There is thus an optimal range for the thickness of the activation layers balancing on the one hand a minimal thickness for technical effect and on the other hand the maximal thickness for reasons of costs.

The activations layer are partially or fully etched away. It is very important in the present invention that during the etching step the substrate tube itself is never etched away. In other words, only the activation layers may be etched.

The activation layers as deposited in step) are removed to an extent of at least 30%.

In yet another an embodiment of the present method during step ii) the activation glass layers as deposited in step i) are removed to an extent of at least 40 %, more preferably at least 50 %.

In yet another an embodiment of the present method during step ii) the activation glass layers as deposited in step i) are removed to an extent of at most 100 %, preferably at most 99 %, or even 95 %, or more preferably at most 90 % or even at most 85% or 80%.

The activation layers may thus be fully etched away, however care should be taken that the substrate tube is not effected by the etching process.

If not the total amount of the deposited activation glass layers can be removed, some glass layers will remain on the interior of the hollow substrate tube. In such a situation it is thus preferred to have remaining glass layers which composition does not affect the final refractive index profile, i.e. glass layers built up of undoped glass forming materials.

During deposition of the activation glass layers it is preferred that the reaction zone is reciprocated between a reversal point near the supply side and a reversal point near the discharge side of the hollow substrate tube. This movement will result in a homogenous reaction zone for the deposition of a number of activation glass layers.

The reaction zone is preferably a plasma generator, wherein the plasma power is preferably set to a value between 1 and 10 kW, so that in particular melting of the substrate tube is prevented.

The present method will be illustrated in one or more examples. These examples are only provided for illustrating purpose and are not intented to limit the scope of the present invention.

### Example 1

A hollow substrate tube made of quartz was manufactured by means of a standard PCVD process as known from Dutch patent NL 1 023 438 in the name of the present applicant.

A hollow substrate tube having a supply side and a discharge side was placed in a furnace, in which furnace a applicator is present, which applicator can move back and forth along the length of the hollow substrate tube within the furnace. Microwave energy was supplied to the applicator via a waveguide so as to create plasma conditions in the interior of the hollow substrate tube, which plasma conditions function to deposit glass layers on the interior of the hollow substrate tube. The plasma generated by the applicator may be present slightly outside the area surrounded by the applicator.

The hollow quartz substrate tube was heated to a temperature of 1120°C and the deposition of preliminary glass layers was initiated by supplying a mixture of SiCl₄ and O₂ to the supply side of the substrate tube. The heating phase lasts for a couple of minutes: 3-10 minutes.

After sufficiently heating of the substrate tube start the deposition of undoped silica layers took place at a rate of 2.5 gram per minutes. During this deposition the full pass length of the applicator was used, that is the applicator travelled back and forth along the length of the hollow substrate tube within the furnace. This deposition of undoped preliminary glass layers was carried out during approximately 5 minutes. The total amount of deposited material was around 12.5 gram with a thickness of about 100 micrometers.

After the deposition of undoped preliminary glass layers an etching step was carried out by supplying a fluorine-containing etching gas, which is a combination of C₂F₆ and O₂, to the interior of the hollow substrate tube.

During this etching step the deposited preliminary glass layers are removed to an extent of 90 % from the inner surface of the tube. The duration of this etching phase was about 9 minutes resulting in a surface of the substrate tube being sufficiently activated and prepared for the further deposition of the glass layers for creating the desired specific refractive index profile.

After the etching phase according to the present invention a standard PCVD deposition process was carried out. Such an internal chemical vapour deposition process was carried out by moving the plasma back and forth along the length of the hollow substrate tube at a velocity of 20 m/min, which hollow substrate tube, was positioned in the interior of a furnace. The furnace was set to a temperature of 1000 °C, using a plasma power of 9 kW. The deposition rate of glass layers on the interior of the thus positioned hollow substrate tube was 3.1 g/min, based on SiO₂, with the pressure inside the hollow substrate tube amounting to about 10 mbar. A gas composition consisting of O₂, SiCl₄, GeCl₄ and C₂F₆ was supplied to the interior of the hollow substrate tube. The substrate tube thus obtained was ready for collapsing into a solid preform.

### Example 2

The procedure according to Example 1 was followed. The difference being that during the etching step the the deposited preliminary glass layers are removed to an extent of 45 % from the inner surface of the tube. The duration of this etching phase was about 4.5 minutes.

The difference between Example 2 over Example 1 is that the total time required for activation is reduced, so that the output of core rods from one equipment is increased.

Core rods produced with the inventive process according to Example 1 or Example 2 were found to contain less bubbles, cracks or other inhomogeneity's than core rods produced with substrate tubes that have undergone plasma etching according to the prior art (viz. plasma etching of the substrate tube itself).

Hence the process according to the present invention leads to a reduction in the rejection rate of preforms, which is advantage.

When core rods are produced for multimode optical fibers with the inventive process according to Example 1 or Example 2 the refractive index profile of the resulting multimode fibers contained less disturbances or deviations from the ideal profile than optical fibers obtained from core rods produced with substrate tubes that have undergone plasma etching according to the prior art (viz. plasma etching of the substrate tube itself).

Hence the process of the present invention results in a higher yield for high-end multimode fibers such as OM-3 or OM-4 multimode fibers.

## Claims

1. A method for activating an inner surface of a hollow glass substrate tube for the manufacturing of an optical fiber preform, wherein said activation is a pretreatment of said hollow glass substrate tube before starting the deposition process, said method comprising the steps of:
i) depositing a number of activation glass layers on said inner surface of said hollow substrate tube by means of a PCVD process; wherein the thickness of the activation glass layers is at least 10 micrometer and at most 250 micrometer;
ii) at least partially removing said activation layers deposited in step i) by means of an etching process, wherein the activation glass layers as deposited in step i) are removed to an extent of at least 30 %.

2. A method according to claim 1, wherein the etching process is plasma etching with an etching gas.

3. A method according to claim 2, wherein said etching gas is a fluorine-containing etching gas, preferably comprising a hydrogen-free fluorinated compound and a carrier gas.

4. A method according to any one or more of the claims 2-3, wherein said etching gas is selected from the group, consisting of CCl₂F₂, CF₄, C₂F₆, SF₆, F₂ and SO₂F₂ or a combination thereof and optionally said carrier gas is selected from the group consisting of oxygen (O₂), nitrogen (N₂), or argon (Ar).

5. A method according to claim 4, **characterized in that** said fluorine-containing etching gas is a mixture of at least O₂ and C₂F₆ and/or SF₆.

6. A method according to any one or more of the preceding claims, wherein undoped glass-forming gases are used in the PCVD process of step i), preferably wherein as said undoped glass-forming gases a mixture of at least O₂ and SiCl₄ is used.

7. A method according to any one or more of the preceding claims, wherein the thickness of the activation glass layers as deposited in step i) is at least 25 micrometer, preferably at least 50 micrometer.

8. A method according to any one or more of the preceding claims, wherein the thickness of the activation glass layers as deposited in step i) is at most 125 micrometer, preferably at most 75 micrometer.

9. A method according to any one or more of the preceding claims, wherein during step ii) the activation glass layers as deposited in step i) are removed to an extent of at least 40 %, preferably at least 50 %.

10. A method according to any one or more of the preceding claims, wherein during step ii) the activation glass layers as deposited in step i) are removed to an extent of at most 100 %, preferably at most 90 %, more preferably at most 80 %.

## Patentansprüche

1. Verfahren zur Aktivierung einer inneren Oberfläche einer hohlen Glassubstratröhre zur Herstellung einer Vorform für Lichtwellenleiter, wobei die Aktivierung eine Vorbehandlung der hohlen Glassubstratröhre ist, die vor dem Start des Abscheidungsverfahrens stattfindet, wobei das Verfahren die folgenden Schritte umfasst:
i) Abscheiden einer Anzahl der Aktivierungsglasschichten auf die innere Oberfläche der hohlen Substratröhre mittels eines PCVD-Verfahrens, wobei die Dicke der Aktivierungsglasschicht wenigstens 10 Mikrometer und höchstens 250 Mikrometer beträgt;
ii) wenigstens teilweises Entfernen der in Schritt i) abgeschiedenen Aktivierungsschichten mittels eines Ätzverfahrens, wobei die in Schritt i) abgeschiedenen Aktivierungsglasschichten in einem Ausmaß von wenigstens 30 % entfernt werden.

2. Verfahren nach Anspruch 1, wobei das Ätzverfahren ein Plasmaätzen mit einem Ätzgas ist.

3. Verfahren nach Anspruch 2, wobei das Ätzgas ein fluorhaltiges Ätzgas ist, das vorzugsweise eine wasserstofffreie, fluorierte Verbindung und ein Trägergas umfasst.

4. Verfahren nach einem oder mehreren der Ansprüche 2 bis 3, wobei das Ätzgas aus der Gruppe ausgewählt ist, die aus CCl₂F₂, CF₄, C₂F₆, SF₆, F₂ und SO₂F₂ oder einer Kombination davon besteht, und wahlweise das Trägergas aus der Gruppe ausgewählt ist, die aus Sauerstoff (O₂), Stickstoff (N₂) oder Argon (Ar) besteht.

5. Verfahren nach Anspruch 4, **dadurch gekennzeichnet, dass** das fluorhaltige Ätzgas eine Mischung aus wenigstens O₂ und C₂F₆ und/oder SF₆ ist.

6. Verfahren nach einem oder mehreren der vorhergehenden Ansprüche, wobei undotierte, glasbildende Gase im PCVD-Verfahren des Schritts i) verwendet werden, vorzugsweise wobei als undotierte, glasbildende Gase eine Mischung von wenigstens O₂ und SiCl₄ verwendet wird.

7. Verfahren nach einem oder mehreren der vorhergehenden Ansprüche, wobei die Dicke der in Schritt i) abgeschiedenen Aktivierungsglasschichten wenigstens 25 Mikrometer, vorzugsweise wenigstens 50 Mikrometer, beträgt.

8. Verfahren nach einem oder mehreren der vorhergehenden Ansprüche, wobei die Dicke der in Schritt i) abgeschiedenen Aktivierungsglasschichten höchstens 125 Mikrometer, vorzugsweise höchstens 75 Mikrometer, beträgt.

9. Verfahren nach einem oder mehreren der vorhergehenden Ansprüche, wobei während des Schritts ii) die in Schritt i) abgeschiedenen Aktivierungsglasschichten in einem Ausmaß von wenigstens 40 %, vorzugsweise von wenigstens 50 %, entfernt werden.

10. Verfahren nach einem oder mehreren der vorhergehenden Ansprüche, wobei während des Schritts ii) die im Schritt i) abgeschiedenen Aktivierungsglasschichten in einem Ausmaß von höchstens 100 %, vorzugsweise von höchstens 90 %, weiter vorzugsweise von höchstens 80 %, entfernt werden.

## Revendications

1. Procédé pour activer une surface interne d'un tube substrat en verre creux pour la fabrication d'une préforme de fibre optique, où ladite activation est un prétraitement dudit tube substrat en verre creux avant de commencer le procédé de dépôt, ledit procédé comprenant les étapes :
i) déposer un nombre de couches de verre d'activation sur ladite surface interne dudit tube substrat creux au moyen d'un procédé PCVD ; où l'épaisseur des couches de verre d'activation est d'au moins 10 micromètres et d'au plus 250 micromètres ;
ii) éliminer au moins partiellement lesdites couches d'activation déposées à l'étape i) au moyen d'un procédé de gravure, où les couches de verre d'activation telles que déposées à l'étape i) sont éliminées jusqu'à une valeur d'au moins 30%.

2. Procédé selon la revendication 1, dans lequel le procédé de gravure est une gravure au plasma avec un gaz de gravure.

3. Procédé selon la revendication 2, dans lequel ledit gaz de gravure est un gaz de gravure contenant du fluor, de préférence comprenant un composé fluoré exempt d'hydrogène et un gaz porteur.

4. Procédé selon une ou plusieurs des revendications 2 et 3, dans lequel ledit gaz de gravure est choisi dans le groupe constitué de CCl₂F₂, CF₄, C₂F₆, SF₆, F₂ et SO₂F₂, ou d'une combinaison de ceux-ci et facultativement ledit gaz porteur est choisi dans le groupe constitué de l'oxygène (O₂), l'azote (N₂), ou l'argon (Ar).

5. Procédé selon la revendication 4, **caractérisé en ce que** ledit gaz de gravure contenant du fluor est un mélange d'au moins O₂ et C₂F₆ et/ou SF₆.

6. Procédé selon une ou plusieurs des revendications précédentes, dans lequel des gaz de formation de verre non dopés sont utilisés dans le procédé PCVD de l'étape i), de préférence où, comme gaz de formation de verre non dopés, un mélange d'au moins O₂ et SiCl₄ est utilisé.

7. Procédé selon une ou plusieurs des revendications précédentes, dans lequel l'épaisseur des couches de verre d'activation telles que déposées à l'étape i) est d'au moins 25 micromètres, de préférence d'au moins 50 micromètres.

8. Procédé selon une ou plusieurs des revendications précédentes, dans lequel l'épaisseur des couches de verre d'activation telles que déposées à l'étape i) est d'au plus 125 micromètres, de préférence d'au plus 75 micromètres.

9. Procédé selon une ou plusieurs des revendications précédentes, dans lequel, pendant l'étape ii) les couches de verre d'activation telles que déposées à l'étape i) sont éliminées jusqu'à une valeur d'au moins 40%, de préférence d'au moins 50%.

10. Procédé selon une ou plusieurs des revendications précédentes, dans lequel, pendant l'étape ii) les couches de verre d'activation telles que déposées à l'étape i) sont éliminées jusqu'à une valeur d'au plus 100%, de préférence d'au plus 90%, plus préférablement d'au plus 80%.
